# EUROPEAN PATENT APPLICATION

(11) **EP 3 442 237 A1**
(43) Date of publication of application: **13.02.2019**
(21) Application number: 16787320.7
(22) Date of filing: 25.08.2016
(51) Int. Cl.: H04N 21/41, H04N 21/439, H04N 5/60

(54) **SMART TELEVISION EXTERNAL DEVICE CONNECTOR**

(30) Priority: 30.03.2016 CN 201620257612 U
(71) Applicant: Le Holdings (Beijing) Co., Ltd., Beijing 100025 (CN); Le Shi Zhi Xin Electronic Technology (Tianjin) Limited, Tianjin 300467 (CN)
(72) Inventor: GENG, Lei, Tianjin 300467 (CN)
(74) Representative: Lavoix
(86) International application number: PCT/CN2016/096663
(87) International publication number: WO 2017/166624

(57) **Abstract**

The present invention provides a connecting piece for an external device of a smart television. The connecting piece is arranged at the top which deviates from one side of a screen of the smart television and comprises a data input interface, a data output interface and a microphone group, wherein the data input interface is arranged at the top end of the connecting piece, and the external device can be inserted into the data input interface, wherein the external device is used for collecting external data; the data output interface is arranged at one side, which faces the smart television, of the connecting piece, is connected to the data input interface, and is used for connecting a mainboard of the smart television through a data cable; and the microphone group comprises a plurality of microphones, wherein each of the microphones is arranged on the surface of the connecting piece, is connected to the data output interface, and is used for collecting sound data, wherein the data output interface transmits the external data collected by the external device and the sound data collected by the microphone group to the mainboard of the smart television through the data cable. According to the invention, the technical problems of a connection method for the external device of the smart television at the present stage that the effect of collecting a signal sent by a user is poor and the user experience is poor due to a large number of cables are solved.

## Description

### CROSS REFERENCE

This application is based upon and claims priority to Chinese Patent Application No. 201620257612.3, filed on March 30, 2016, titled "Connecting Piece for External Device of Smart Television", and the entire contents of which are incorporated herein by reference.

### TECHNICAL FIELD

Embodiments of the present invention relate to the field of accessories of a smart television, and particularly relate to a connecting piece for an external device of a smart television.

### BACKGROUND

At present, with the improvement of the digital broadcasting technology and the rapid development of television software and hardware, a television has already become intelligentized. Now, the television is not only used for television program watching simply, but also used for recreation and man-machine interaction.

The so-called man-machine interaction of the smart television means that for the smart television, a signal sent by a user is collected by a data collection device, and after the collected signal is processed through a preset program, the television makes corresponding responses, for example, channel change, volume adjustment, information interaction and the like. Moreover, the signal sent by the user mainly refers to a sound signal and an image signal of the user, for example, the sound signal of the user collected by a microphone, the image signal of the user collected by a camera, and the like, wherein for another example, the microphone is placed at the side or top of the smart television and is connected to a mainboard of the smart television through a data cable, and the camera is placed at the side or top of the smart television and is connected to the mainboard of the smart television, so as to achieve the effect of collecting the signal sent by the user.

However, with the development of the television software and hardware technology, the screen of the smart television becomes lighter and thinner, so there is no space for placing a camera or a microphone at the top of the television, but the effect of collecting a signal sent by a user will be influenced if the camera or the microphone is placed at the side of the smart television. Thus, the existing connection method for the external device of the smart television and the smart television has not been suitable to the development of the television software and hardware technology at the present stage. In addition, at the present stage, the smart television is provided with too many data cables including the data connection cables of the external devices like cameras or microphones except for its own data connection cables, resulting in poor user experience.

In other words, the connection method for the external device of the smart television at the present stage has the technical problems that the effect of collecting a signal sent by a user is poor and the user experience is poor due to a large number of cables.

### SUMMARY

Embodiments of the present invention provide a connecting piece for an external device of a smart television, so as to solve the technical problems of a connection method of the external device of the smart television at the present stage that the effect of collecting a signal sent by a user is poor and the user experience is poor due to a large number of cables.

In order to solve the technical problem mentioned above, the embodiments of the present invention provide a connecting piece for an external device of a smart television, wherein, the connecting piece is arranged at the top which deviates from one side of a screen of the smart television and comprises:
a data input interface, wherein the data input interface is arranged at the top end of the connecting piece, and the external device can be inserted into the data input interface, wherein the external device is used for collecting external data;
a data output interface, wherein the data output interface is arranged at one side, which faces the smart television, of the connecting piece, is connected to the data input interface, and is used for connecting a mainboard of the smart television through a data cable; and
a microphone group, wherein the microphone group comprises a plurality of microphones, wherein each of the microphones is arranged on the surface of the connecting piece, is connected to the data output interface, and is used for collecting sound data,
wherein, the data output interface transmits the external data collected by the external device and the sound data collected by the microphone group to the mainboard of the smart television through the data cable.

A filtering and noise reduction module is further arranged on each of the microphones, and the filtering and noise reduction modules are used for filtering or reducing preset sound information.

The preset sound information further comprises non-human sound information.

Each of the microphones is further arranged at the top of the connecting piece and at one side, which is away from the back surface of the smart television, of the connecting piece.

The microphones arranged at a top of the connecting piece and at one side, which is away from the back surface of the smart television, of the connecting piece further correspond to each other in positions and are in communication with each other to form microphone through holes.

The connecting piece is further fixed to the back surface of the smart television through a plurality of screws arranged at one side, which is away from the back surface of the smart television, of the connecting piece.

The connecting piece is further adhered to one side, which is away from the back surface of the smart television, of the connecting piece.

The top of the connecting piece and the top of the smart television are further aligned with each other.

The data input interface further comprises a USB interface or a Micro USB interface.

The external device further comprises an image collection device.

For the connecting piece for an external device of a smart television provided in embodiments of the present invention, the connecting piece is arranged at the top, which deviates from one side of a screen of the smart television and comprises a data input interface in which the external device can be inserted, a microphone group which is used for collecting external data and is used for collecting sound data, and a data output interface which transmits the external data and the sound data to a mainboard of the smart television, thereby solving the technical problems of a connection method of the external device of the smart television at the present stage that the effect of collecting a signal sent by a user is poor and the user experience is poor due to a large number of cables, so that the connecting piece is more suitable to the trend that the smart television become lighter and thinner at the present stage, and improves the user experience.

### BRIEF DESCRIPTION OF THE DRAWINGS

In order to more clearly describe the technical solutions in the specific embodiments of the present invention or in the prior art, hereinafter the accompanying drawings required to be used in the description of the specific embodiments or the prior art will be briefly introduced. Apparently, the accompanying drawings described below are only directed to some embodiments of the present invention, and for those skilled in the art, without expenditure of creative labor, other drawings can be derived on the basis of these accompanying drawings.
Fig. 1 is a structural block diagram of a connecting piece for an external device of a smart television provided in embodiments of the present invention;
Fig. 2 is a three-dimensional structural diagram of a connecting piece for an external device of a smart television provided in embodiments of the present invention;
Fig. 3 is a back view of the usage state of a connecting piece for an external device of a smart television provided in embodiments of the present invention; and
Fig. 4 is a top view of the usage state of a connecting piece for an external device of a smart television provided in embodiments of the present invention.

### DETAILED DESCRIPTION OF THE EMBODIMENTS

A clear and complete description of the technical solutions in the present invention will be given below, in conjunction with the accompanying drawings in the embodiments of the present invention. Apparently, the embodiments described below are a part, but not all, of the embodiments of the present invention. All of other embodiments, obtained by those of ordinary skill in the art based on the embodiments of the present invention without any creative effort, fall into the protection scope of the present invention.

In the description of the present invention, it needs to be noted that, the terms such as "center", "above", "below", "left", "right", "vertical", "horizontal", "outside" refer to the orientation or position relation based on the illustration of the drawings, and merely for facilitating and simplifying the description of the present invention, but not indicating or implying that the apparatus or components must have a specific orientation, or a specific configuration and operation. Thus, it should be understood as a limitation to the present invention. In addition, the terms such as "first", "second", "third" are merely for the purpose of description, but should not be understood as an indication or implication of relative importance.

In the description of the present invention, it needs to be noted that, unless specifically defined or restricted otherwise, terms "mount", "interconnect", "connect" should be broadly construed, for example, they may be fixed connection or detachable connection or integral connection; they may be mechanical connection or electrical connection; they may be direct connection, or indirect connection via an intermediate medium, or internal communication between two units; they may be wireless connection or wired connection. For those skilled in the art, the specific meaning of the aforementioned terms in the present invention can be understood according to specific situations thereof.

### Detailed Embodiments

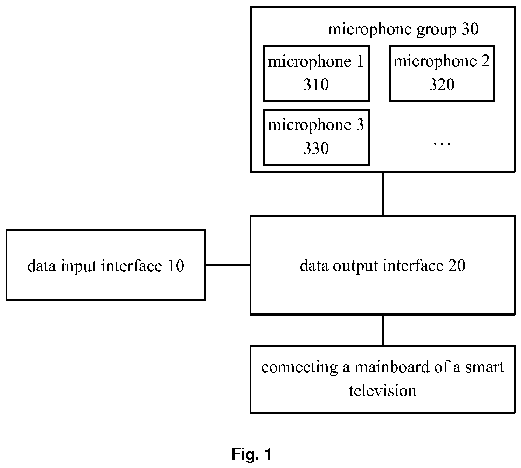

In order to solve the technical problems of the connection method of an external device of a smart television at the present stage that the effect of collecting a signal sent by a user is poor and the user experience is poor due to a large number of cables, please refer to Fig. 1, and Fig. 1 is a structural block diagram of a connecting piece for an external device of a smart television provided in embodiments of the present invention, the connecting piece comprising a data input interface 10, a data output interface 20 and a microphone group 30.

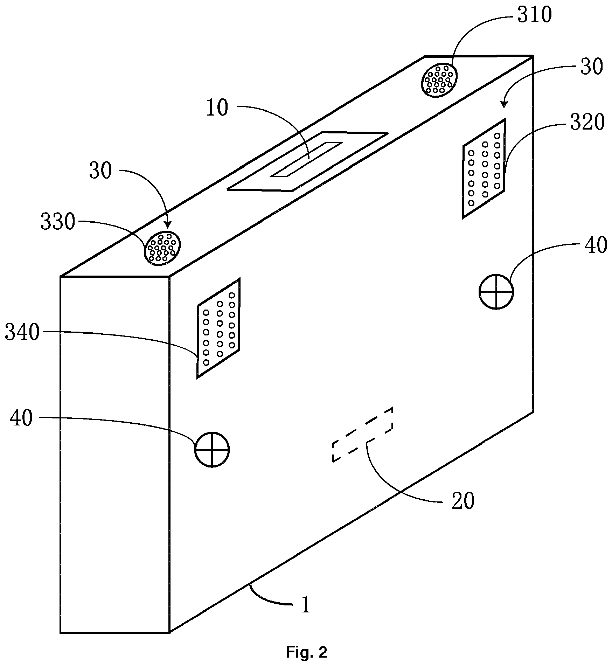

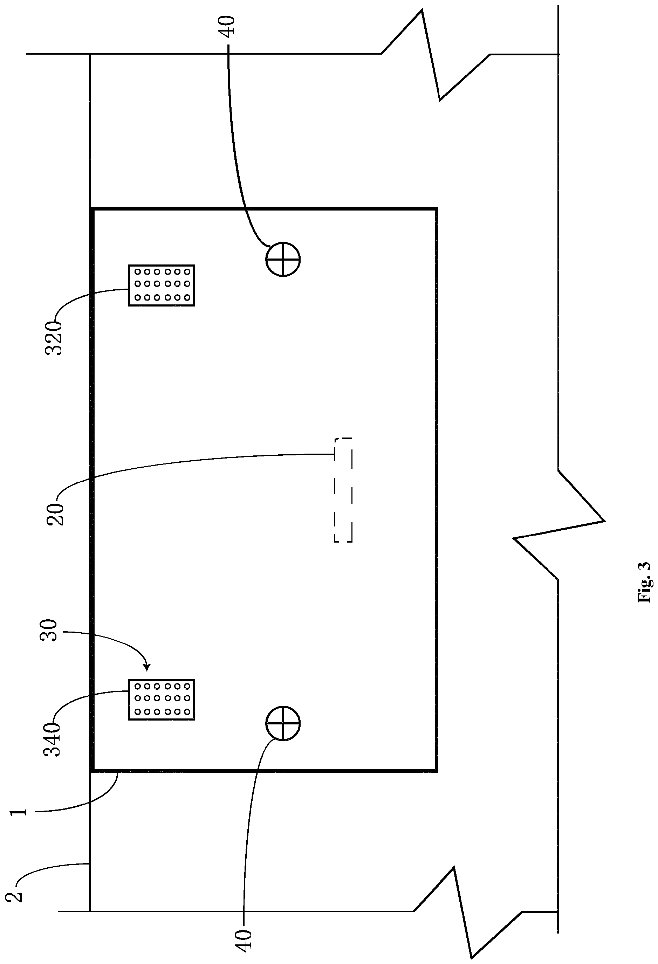

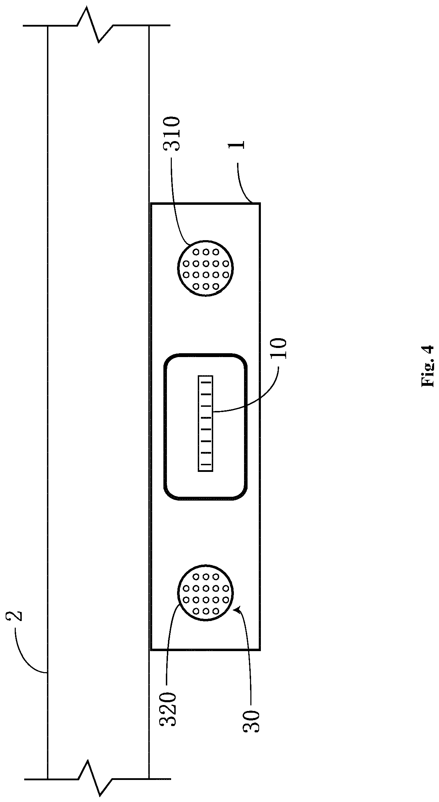

Please refer to Fig. 2 to Fig. 4, and Fig. 2 to Fig. 4 are respectively a three-dimensional structural diagram of a connecting piece for an external device of a smart television provided in embodiments of the present invention and a back view and a side view of the usage state of a connecting piece for an external device of a smart television provided in embodiments of the present invention, the connecting piece comprising a connecting piece body 1, wherein the connecting piece body 1 is arranged at the top end which deviates from one side of a screen of the smart television 2. Specifically, the data input interface 10 is arranged at the top end of the connecting piece body 1, and the external device can be inserted in the data input interface, wherein the external device is used for collecting external data; the data output interface 20 is arranged at one side, which faces the smart television 2, of the connecting piece body 1, is connected to the data input interface 10, and is used for connecting a mainboard of the smart television 2 through a data cable; and the microphone group 30 comprises a plurality of microphones (such as a microphone 310, a microphone 320, a microphone 330, a microphone 340 and the like shown in the figure), wherein each of the microphones is arranged on the surface of the connecting piece body 1, is connected to the data output interface 20, and is used for collecting sound data, wherein the data output interface 20 transmits the external data collected by the external device and the sound data collected by the microphone group 30 to the mainboard of the smart television 2 through the data cable.

Herein, the external device comprises an image collection device, wherein the image collection device comprises a camera and other devices which can collect an image or a video; herein, a camera with a USB plug is taken as an example to make description, wherein the USB plug of the camera is inserted into the data input interface 10 and is arranged at the top end of the connecting piece; specifically, the top of the connecting piece body 1 and the top of the smart television 2 are aligned with each other, so, on the one hand, the connecting piece body 1 is allowed to be completely hidden behind the smart television 2, thereby improving the aesthetics of the smart television 2, and on the other hand, the camera is allowed to be completely exposed to the outside of the connecting piece body 1 and the smart television 2, and is located in a higher shooting position in a good shooting angle, thereby facilitating well collection of the external data of the user; and herein, the external data mainly refers to image data and video data of the user, after the external data is collected, the external data is transmitted to the data output interface 20 connected thereto, and is transmitted to the mainboard of the smart television 2 through the data cable connecting the data output interface 20, and then, after corresponding processing is performed through a preset program by using the external data, the smart television 2 makes corresponding responses, wherein for example, unlocking startup is performed by collecting head portrait information of the user, or payment is conducted by face recognition, and the like, and for another example, channel change, volume adjustment and the like are performed by collecting gestures of the user.

Herein, the data input interface 20 comprises a USB interface, or the data input interface 20 comprises a Micro USB interface; it is important to note that the data input interface 20 mainly fits a specific shape of an output plug of the external device, but the specific shape thereof is not specifically limited; the USB interface and the Micro USB interface mentioned above are only exemplary in the present application, rather than the limitation to the protection scope of the present application; and it can be conceived that so long as all the interface types can fit the external device, the interfaces are all suitable to the solution of the present application, however, in the practical application, the interfaces can be randomly configured.
When the user carries out man-machine interaction with the smart television 2, except for image and video signals, the sound signal of the user should also be acquired. The microphone group 30 is used for collecting the sound signal of the user, and specifically, the microphone group 30 comprises a microphone 310, a microphone 320, a microphone 330, a microphone 340 and the like; and herein, the number of the microphones is not limited excessively, and can be set according to an actual situation, wherein for example, the number of the microphones can be set according to the size of the configured smart television 2 and the usage environment of the smart television 2 (such as space, an environmental noise level and the like), and for another example, when the size of the configured smart television 2 is larger, more microphones are required, and when the smart television 2 is used in the larger space and is used in a quite noisy environment, more microphones are required. Each of the microphones (the microphone 310, the microphone 320, the microphone 330 and the microphone 340 shown in the figure) is arranged on the surface of the connecting piece body 1, and is connected to the data output interface 20, and each of the microphones transmits the collected sound data of the user to the mainboard of the smart television 2 through the data cable connecting the data output interface 20,. After the corresponding processing is performed through a preset program by using the sound data, the smart television 2 makes corresponding responses, wherein for example, unlocking startup or channel change, volume adjustment and the like are performed by voice information, or man-machine interaction, such as conversation and the like, is performed on an intelligent robot of the smart television 2.

In other preferable embodiments of the present invention, a filtering and noise reduction module is arranged on each of the microphones (the microphone 310, the microphone 320, the microphone 330 and the microphone 340 shown in the figure), the filtering and noise reduction module being used for filtering or reducing preset sound information. Further, the preset sound information comprises non-human sound information.

Herein, the filtering and noise reduction module is used for performing filtering and noise reduction on each of the microphones, that is to say, the noise of the preset sound information is filtered or reduced. The preset sound information may include but is not limited to non-human sound information, and specifically, parts of the above mentioned non-human sound information, for example, sound of human footsteps, sound of knocking at the door and closing the door, bells of a cell phone and the like can be pre-arranged in the filtering and noise reduction module. When a sound having a frequency approaching to that of the non-human sound is collected, the sound is weakened or filtered, so as to highlight the collected sound signal of the user, thereby reducing the pressure of processing the sound signal by the main board of the smart television 2 through the preset program, so as to improve the response accuracy of the smart television 2 and improve the user experience.

Structurally, each of the microphones (the microphone 310, the microphone 320, the microphone 330 and the microphone 340 shown in the figure) is arranged at the top of the connecting piece body 1 and at one side, which is away from the back surface of the smart television 2, of the connecting piece. Generally, the microphones need to be arranged at the top of the connecting piece body 1 and at one side , which is away from the back surface of the smart television 2, of the connecting piece, so that voice information around the smart television 2 can be completely collected, thereby improving the completeness of collecting sound data of the user by the microphone group 30, so as to improve the response accuracy of the smart television 2 and improve the user experience.

Further, the microphones arranged at the top of the connecting piece body 1 and at one side, which is away from the back surface of the smart television 2, of the connecting piece correspond to each other in positions and are in communication with each other to form microphone through holes; as shown in Fig. 2, the microphone 310, the microphone 320, the microphone 330 and the microphone 340 correspond to each other in positions, it is specifically shown that the distance between the microphone 310 and the connecting piece body 1 is the same as the distance between the microphone 320 and the connecting piece body 1, and in the connecting piece body 1, the microphone 310 and the microphone 320 are in communication with each other, and form microphone through holes from the top of the connecting piece body 1 to one side, which is away from the back surface of the smart television 2, of the connecting piece; and in this structure, through the design of the microphone through holes, directional microphones can be formed, and the directional microphones can receive a sound within an expected range, that is to say, the receiving direction thereof is directional, and by taking the present application as an example, only the sound in the range facing the television is received, so that the quality of receiving the sound can be ensured, and more accurate sound data can be provided for the smart television, thereby facilitating that the smart television makes corresponding accurate responses, and further improving the user experience.

The data output interface 20 is clamped between the connecting piece body 1 and the back surface of the smart television 2, can be a USB interface or a Micro USB smart television which is the same as the data input interface 10, and can also be directly connected to the mainboard of the smart television 2 through a data flat cable. In general, in order to enable accessories of the smart television 2 to be disassembled and assembled randomly, the manner of a data interface may be adopted, and a data cable is configured to perform connection, so as to improve the operability of the user.

In addition, the connecting piece body 1 is fixed to the back surface of the smart television 2 through a plurality of screws 40 arranged at one side, which is away from the back surface of the smart television 2, of the connecting piece, or the connecting piece body 1 is adhered to one side, which is away from the back surface of the smart television 2, of the connecting piece. In the two above mentioned manners, the connecting piece is fixed to the smart television 2 through the screws 40 or adhered to the smart television 2, so it can be conceived that buckle structures which fit with each other can be arranged at one side, which faces the back surface of the smart television 2, of the connecting piece body 1 and on the back surface of the smart television 2, so as to achieve the connection between the connecting piece body 1 and the smart television 2. It is important to note that these embodiments are only exemplary in the present application, rather than limitation to the protection scope of the present application. It can be conceived that the manners belonging to the above thinking should be in the protection scope of the present application.

In addition, the external device of the present application can be an image collection device, for example, a camera, and an intelligent conference system can be formed by the image collection device in combination with a microphone group of the present application, wherein the microphone group is used for collecting sound data of the user, the image collection device (the camera) is used for collecting video data of the user, and the mainboard of the smart television can process these data, communicate with a device in a networking state simultaneously through the Internet. The video data is displayed on other terminals (such as a smart television and a smart cell phone) and sound is played through loudspeakers of other terminals, for example, for holding a video conference, having a video chat, and the like. The connecting piece for an external device of a smart television of the present application can complete various online and offline interaction activities with the help of a terminal device, thereby improving the usage experience of the user.

By use of the connecting piece of embodiments of the present application, on one hand, data cables between the external device and the smart television 2 are reduced, thereby improving the appearance aesthetics of the smart television 2, and on the other hand, in the case that the smart television 2 is very light and thin, it can be ensured that the external device is located in a quite good collection position. The connecting piece itself is integrated with a microphone group with a filtering and noise reduction module, and has a good effect of collecting a signal sent by the user, thereby solving the technical problems of a connection method for the external device of the smart television at the present stage that the effect of collecting a signal sent by a user is poor and the user experience is poor due to a large number of cables.

Embodiments of the device described above are only illustrative, wherein the unit described as a separated component can be or cannot be separated physically, and a component displayed as a unit can be or cannot be a physical unit, that is to say, the components can be located at one place or can be distributed on a plurality of network units. The purpose of the solution of this embodiment can be achieved by selecting some or all modules according to actual requirements. Those ordinary skilled in the art can understand and implement the solution without making creative efforts.

By the description of the above embodiments, those ordinary skilled in the art can clearly understand that each embodiment can be achieved in the manner of using software and a necessary common hardware platform, and can also be achieved by using hardware. Based on such understanding, the technical solution essentially or parts contributing to the prior art can be displayed in a form of a software product. The computer software product can be stored in a computer readable storage medium, for example, an ROM/RAM, a disk, a CD and the like, and includes several instructions to enable a computer device (may be a personal computer, a server or a network device and the like.) to execute the methods in the embodiments or some parts of the embodiments.

Finally, it should be noted that the above embodiments are only used for describing rather than limiting the technical solution of the present invention. Although the present invention is described in detail by referring to the above embodiments, those skilled in the art should understand that: the technical solution recorded in various embodiments can still be amended, or some technical features therein can be replaced equivalently, however, these amendments or replacements do not enable the essence of the corresponding technical solution to depart from the spirit and the scope of various embodiments of the present invention.

## Claims

1. A connecting piece for an external device of a smart television, **characterized in that** the connecting piece is arranged at the top which deviates from one side of a screen of the smart television and comprises:
a data input interface, wherein the data input interface is arranged at the top end of the connecting piece, and the external device can be inserted into the data input interface, wherein the external device is used for collecting external data;
a data output interface, wherein the data output interface is arranged at one side, which faces the smart television, of the connecting piece, is connected to the data input interface, and is used for connecting a mainboard of the smart television through a data cable; and
a microphone group, wherein the microphone group comprises a plurality of microphones, wherein each of the microphones is arranged on the surface of the connecting piece, is connected to the data output interface, and is used for collecting sound data,
wherein, the data output interface transmits the external data collected by the external device and the sound data collected by the microphone group to the mainboard of the smart television through the data cable.

2. The connecting piece for an external device of a smart television of claim 1, **characterized in that** a filtering and noise reduction module is arranged on each of the microphones, and the filtering and noise reduction modules are used for filtering or reducing preset sound information.

3. The connecting piece for an external device of a smart television of claim 2, **characterized in that** the preset sound information comprises non-human sound information.

4. The connecting piece for an external device of a smart television of claim 1 or claim 2, **characterized in that** each of the microphones is arranged at the top of the connecting piece and at one side, which is away from the back surface of the smart television, of the connecting piece.

5. The connecting piece for an external device of a smart television of claim 4, **characterized in that** the microphones arranged at a top of the connecting piece and at one side, which is away from the back surface of the smart television, of the connecting piece correspond to each other in positions and are in communication with each other to form microphone through holes.

6. The connecting piece for an external device of a smart television of claim 1, **characterized in that** the connecting piece is fixed to the back surface of the smart television through a plurality of screws arranged at one side, which is away from the back surface of the smart television, of the connecting piece.

7. The connecting piece for an external device of a smart television of claim 1, **characterized in that** the connecting piece is adhered to one side, which is away from the back surface of the smart television, of the connecting piece.

8. The connecting piece for an external device of a smart television of any one of claims 1, 6 and 7, **characterized in that** the top of the connecting piece and the top of the smart television are aligned with each other.

9. The connecting piece for an external device of a smart television of claim 1, **characterized in that** the data input interface comprises a USB interface or a Micro USB interface.

10. The connecting piece for an external device of a smart television of claim 1, **characterized in that** the external device comprises an image collection device.
